Europäisches Patentamt

European Patent Office

Office européen des brevets

(11) Publication number: **0 408 154 A1**

# (12) EUROPEAN PATENT APPLICATION

(21) Application number: 90201889.4

(22) Date of filing: 12.07.90

(51) Int. Cl.⁵: **A47J 31/06, A47J 31/057**

(30) Priority: 13.07.89 NL 8901809

(43) Date of publication of application:
16.01.91 Bulletin 91/03

(84) Designated Contracting States:
**BE DE DK ES FR GB NL SE**

(71) Applicant: **Sara Lee/DE N.V.**
**Keulsekade 143**
**NL-3532 AA Utrecht(NL)**

(72) Inventor: **van Dort, Gerardus Johannes**
**Oppenheimplein 4**
**NL-3551 BN Utrecht(NL)**
Inventor: **van Hal, Cornelis Willem**

Zeisterweg 73
**NL-3984 NK Odijk(NL)**
Inventor: **Rusche, Emil Herman**
**Ansinghlaan 80**
**NL-3431 GW Nieuwegein(NL)**
Inventor: **Vroonland, Christoffel Antonius**
**Johannes**
**Aviatik 9**
**NL-3769 JK Soesterberg(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Filterpan with ring.**

(57) The invention relates to an apparatus for preparing a number of consumption units of a beverage, as coffee or tea, comprising a combination of a (coffee) making apparatus with water supply means, a filterpan (2) and a disposable filter cartridge (5) which fits into the filterpan (2), which filter pan (2) and filter cartridge (5) having cooperating parts for forming a watertight seal, a support surface being provided for a vessel for receiving the extract. According to the invention the apparatus is characterized by a water outflow part (7) connecting at least in part to the filter cartridge (5) for water to be poured on said filter cartridge (5), the water outlet terminating in said water outflow part.

FIG.2

## FILTERPAN WITH RING

The invention relates to an apparatus for preparing a number of consumption units of a beverage, as coffee or tea, comprising a combination of a (coffee) making apparatus with water supply means, a filterpan and a disposable filter cartridge that fits into the filterpan, which filter pan and filter cartridge have cooperating parts for forming a water-tight seal, a support surface being provided for a vessel for receiving the extract.

In such an apparatus essentially all water must be passed through the filter at the central portion if all water is to properly participate in the brewing process instead of, for instance, flowing away at the sides via the route of least resistance, where, as will be clear, the water does not or insufficiently participate in the brewing process.

An apparatus in which the above is taken into account, is known from German Auslegeschrift 3.613.119 and the corresponding European patent application 249,700. To ensure the water passes through the filter at the proper location, this known apparatus makes use of the effect of the degassing of the coffee, which creates a minor excess pressure in the space within the filter cartridge, as a result of which the upper filter will bulge in such a way that its upper end will engage the downwardly directed, suspending circular edge of a partition along the inner side of which the heated water is supplied.

This requires a very accurate dimensioning, in such a way that a sufficient bulging occurs. Accordingly, only specially shaped filters, in which the material to be extracted is uniformly distributed can be used. Nevertheless, before the bulging has taken place, a part of the water will freely flow away at the sides and thus participate insufficiently in the brewing process.

The invention aims to remove this drawback. To that end, an apparatus of the type described in the preamble is characterized by a water outflow part connecting at least in part to the filter cartridge for water to be poured on said filter cartridge, the water outlet terminating in said water outflow part.

The water outflow part may be connected to the filterpan. The water outflow part may be connected to the filterpan for both pivoting and rotating movement.

In further elaboration of the invention the water supply rate may be higher than the discharge rate of the extract. It will be clear that in that case the volume of the part of the filterpan that is external relatively to the outflow part must be sufficiently large to receive the excess water.

By providing an opening at the top of the water outflow part, the build-up of too large a pressure in the water outflow part, and hence the chance of accidents happening, is avoided.

For the sake of completeness reference is made to US Patent No. 3,561,349, disclosing a coffee making apparatus utilizing a spray nozzle to be fixedly mounted on the filter cartridge, to ensure that the hot water supplied can participate in the extraction at the central part of the filter cartridge. It will be clear this requires the necessary accurate handling.

The same holds for the disclosure in US Patent 3,511,166, which, moreover, involves the risk of the user coming into contact with hot water when he is in a hurry to make a cup of coffee and is impatient. Furthermore, the apparatus is considerably more complex than the apparatus according to the present application. Also, at the outset of the brewing cycle, water will readily flow away via the route of least resistance, i.e. without having participated in the extraction. This difference also occurs in the apparatus known from US Patent No. 3,561,349.

Further, reference may be made to European patent application 70,403, disclosing an apparatus for making espresso.

US Patent No. 3,450,024, finally, shows great similarities to the US Patent No. 3,561,349, referred to hereinabove.

The water outflow part in the present invention is part of the filterpan, which is not the case in German patent application 3.613.119.

The apparatus according to the invention has the further advantage that when water is poured on, the filter cartridge cannot start floating since it is effectively "wedged" between the cylindrical guide and the filter pan. A further advantage of the apparatus according to the invention is the more defined brewing behaviour compared with the known methods of brewing coffee.

Further, the diameter of the water outflow part in the apparatus according to the invention is preferably larger than 0.6 times the diameter of the filter cartridge. Thus it is ensured that for obtaining a particular amount of extract, the water column above the filter cartridge will not be too high and that, accordingly, the pressure will not be too high, which will prevent the water from percolating too fast.

To further explain the invention one embodiment of a coffee making apparatus with a filterpan according to the invention will now be described with reference to the accompanying drawings, in which:

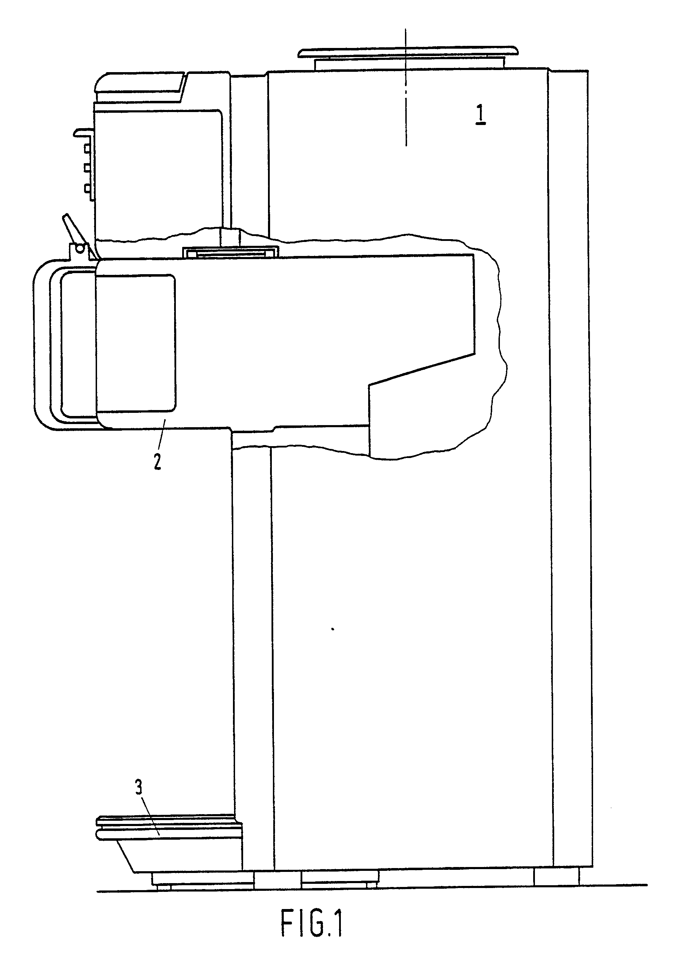

Fig. 1 is a schematic, partly sectional, side view of the coffee making apparatus according to the invention; and

Fig. 2 is a sectional view of the filterpan used in the apparatus according to Fig. 1, with the ring in mounted position.

According to the invention a well known per se coffee making apparatus 1 comprises in conventional manner the known elements (not shown in detail, therefore) including a housing 1, a filterpan 2 and a support 3 for supporting a holder (not shown) for receiving the beverage prepared.

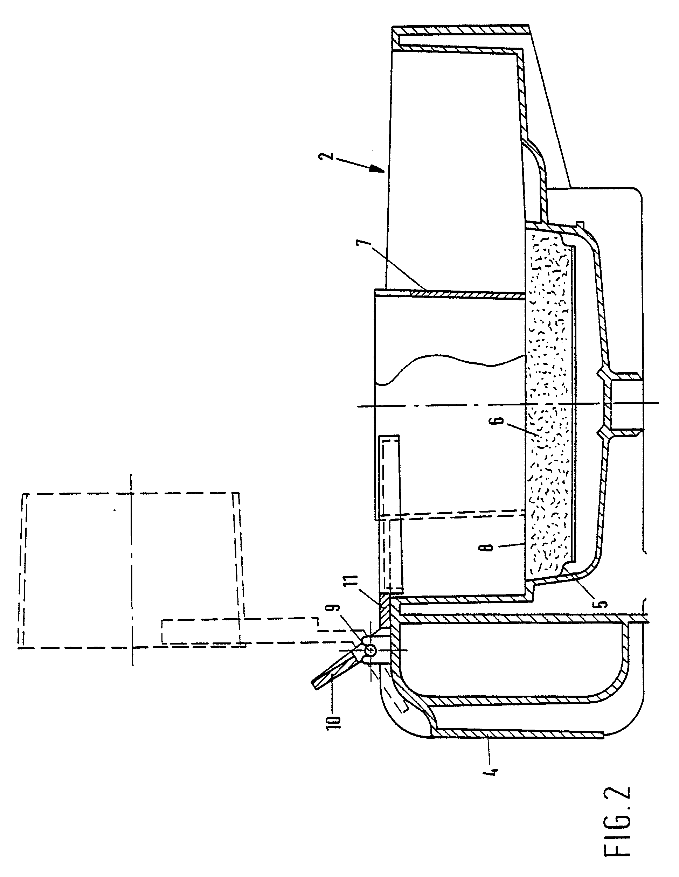

The filterpan 2 is shown to an enlarged scale in Fig. 2 and comprises a grip 4 in known manner.

The filter pan is so constructed that in known manner it can accommodate a filter cartridge, to be used once and filled with ground coffee or a different material, in such a way that water that is poured on cannot freely percolate between the wall of the filter cartridge and the filterpan, but is forced to pass through the filter cartridge and the product present therein. To promote this, and to ensure that no liquid percolates at the edge portion of the filter cartridge and thus participates insufficiently in the extraction of the ground product, for instance coffee, provided in the filter cartridge, the filterpan has a hot water outflow part (the ring) 7 rotatably mounted to it, via which part the hot water is supplied to the filterpan. Because for operation the hot water outflow part is moved down as far as an upper filter 8 of the filter cartridge 5, it is ensured that the water is supplied and percolates at the central portion of the filter cartridge 5, so that it participates in the extraction of the ground product, i.e. the coffee 6. The construction is such that this process will take place independently of the degassing of the ground product.

The drawing further shows that the hot water outflow part 7 is rotatably connected with the filterpan 2 by means of an arm 11 and a pin 9 and a finger key 10.

After the coffee has been made, the filter cartridge 5 can be removed by displacing the hot water outflow part 7 into the position indicated in Fig. 2 by the broken lines, after which the filter cartridge 5 can be readily removed and the whole can be cleaned.

It will be clear that without departure from the invention a great number of modifications are conceivable. Thus, instead of constructing the hot water outflow part with a rotatable suspension, it may be of such construction that it can be rotated sideways relatively to the filter cartridge. In a similar way numerous variants are conceivable. Thus, the apparatus according to the invention can also be used for cold extraction. In this connection reference is made to applicant's Dutch patent application 87,01569 and the corresponding US patent application serial no. 214,528 filed on July 1, 1988.

## Claims

1. An apparatus for preparing a number of consumption units of a beverage, as coffee or tea, comprising a combination of a (coffee) making apparatus with water supply means, a filterpan and a disposable filter cartridge which fits into the filterpan, which filter pan and filter cartridge have cooperating parts for forming a watertight seal, a support surface being provided for a vessel for receiving the extract, characterized by a water outflow part connecting at least in part to the filter cartridge for water to be poured on said filter cartridge, the water outlet terminating in said water outflow part.

2. An apparatus according to claim 1, characterized in that the water outflow part is connected with the filterpan.

3. An apparatus according to claim 2, characterized in that the water outflow part is rotatably connected to the filterpan.

4. An apparatus according to claim 1, 2, or 3, characterized in that the water supply rate is greater than the discharge rate of the extract.

5. An apparatus according to one or more of the preceding claims, characterized in that the volume of the filterpan outside of the outflow part is sufficiently large to receive the excess water.

6. An apparatus according to one or more of the preceding claims, characterized in that at the top of the outflow part an opening is provided.

7. An apparatus according to one or more of the preceding claims, characterized in that the diameter of the water outflow part is greater than or equal to 0.6 times the diameter of the filter cartridge.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3610132 (MARTIN) <br> * column 2, line 27 - column 4, line 55; figures 2, 6 * | 1, 2 | A47J31/06 <br> A47J31/057 |
| Y | | 5, 6 | |
| A | | 4, 7 | |
| | --- | | |
| D,X | US-A-3450024 (MARTIN) <br> * column 2, line 19 - column 5, line 30; figures 1, 9 * | 1, 5 | |
| A | | 4 | |
| | --- | | |
| Y | US-A-4666724 (DILORENZO) <br> * column 3, lines 9 - 22; figures 1, 2 * | 5 | |
| | --- | | |
| Y | EP-A-0115557 (PETRA-ELECTRIC PETER HOHLFELDT GMBH) <br> * page 4, lines 6 - 28; figure 1 * | 6 | |
| | --- | | |
| A | US-A-3384004 (PERLMAN ET AL) <br> * figure 3 * | 3 | |
| | --- | | TECHNICAL FIELDS SEARCHED (Int. Cl.5) |
| A | NL-A-8403438 (KOFFIEBRANDERIJ EN THEEHANDEL "DRIE MOLLEN SINDS 1818" B.V.) <br> ----- | | A47J |

The present search report has been drawn up for all claims

| Place of search | Date of completion of the search | Examiner |
|---|---|---|
| THE HAGUE | 12 OCTOBER 1990 | BODART P. |